# EUROPEAN PATENT APPLICATION

(11) **EP 2 615 249 A2**
(43) Date of publication of application: **17.07.2013**
(21) Application number: 12191909.6
(22) Date of filing: 09.11.2012
(51) Int. Cl.: F01D 5/28

(54) **Composition of a bond coat for environmental barrier coatings able to hinder or reverse creep degradation**

(30) Priority: 11.01.2012 US 201213348252
(71) Applicant: General Electric Company, Schenectady, New York 12345 (US)
(72) Inventor: Das, Rupak, Greenville, SC South Carolina 29615-4614 (US); Delvaux, John McConnell, Greenville, SC South Carolina 29615-4614 (US); Zhang, James, Greenville, SC South Carolina 29615-4614 (US)
(74) Representative: Szary, Anne Catherine

(57) **Abstract**

A gas turbine blade (310) has a bond coat (320) applied to its surface. The bond coat (320) includes silicon and a reactive material (380). The reactive material (380) may react with thermally grown oxide generated (330) at the bond layer (320) to prevent and reverse creep. One or more protective layers (340) may be applied to the bond layer (320).

## Description

### TECHNICAL FIELD

The present disclosure relates to gas turbine blades and in particular to creep resistant coating systems for gas turbine blades.

### BACKGROUND

Gas turbines, which may also be referred to as combustion turbines, are internal combustion engines that accelerate gases, forcing the gases into a combustion chamber where heat is added to increase the volume of the gases. The expanded gases are then directed towards a turbine to extract the energy generated by the expanded gases. Gas turbines have many practical applications, including usage as jet engines and in industrial power generation systems.

The acceleration and directing of gases within a gas turbine are often accomplished using rotating blades. Extraction of energy is typically accomplished by forcing expanded gases from the combustion chamber towards gas turbine blades that are spun by the force of the expanded gases exiting the gas turbine through the turbine blades. Due to the high temperatures of the exiting gases, gas turbine blades must be constructed to endure extreme operating conditions. In many systems, complex turbine blade cooling systems are employed. While gas turbine blades are commonly constructed from metals, more advanced materials are now being used for such blades, such as ceramics and ceramic matrix composites. When using such advanced materials or simply metal in constructing gas turbine blades, coatings may be applied to provide added protection to the blades and increased heat resistance.

### BRIEF DESCRIPTION OF THE INVENTION

A gas turbine blade may have a bond coat applied to its surface. The bond coat may include silicon and a reactive material. The reactive material may react with thermally grown oxide (TGO) generated at the bond layer to prevent and reverse creep. One or more protective layers may be applied to the bond layer.

A method is disclosed for mitigating and preventing creep. A bond layer including silicon and a reactive material may be applied to a surface of a gas turbine blade. The reactive material may react with thermally grown oxide generated at the bond layer to prevent and reverse creep. One or more protective layers may be applied to the bond layer

The foregoing summary, as well as the following detailed description, is better understood when read in conjunction with the drawings. For the purpose of illustrating the claimed subject matter, there is shown in the drawings examples that illustrate various embodiments; however, the invention is not limited to the specific systems and methods disclosed.

### BRIEF DESCRIPTION OF THE DRAWINGS

These and other features, aspects, and advantages of the present subject matter will become better understood when the following detailed description is read with reference to the accompanying drawings, wherein:
Figure 1 is a non-limiting example of coatings applied to a blade surface.
Figure 2 is another non-limiting example of coatings applied to a blade surface and the creeping that may result.
Figure 3 is a non-limiting example of coatings applied to a blade surface including a bond coat that include titanium particles.
Figure 4 is another non-limiting example of coatings applied to a blade surface including a bond coat that include titanium particles.
Figure 5 is another non-limiting example of coatings applied to a blade surface including a bond coat that include titanium particles.

### DETAILED DESCRIPTION OF THE INVENTION

In an embodiment, an environmental barrier coating (EBC) may be applied to gas turbine blade constructed from a ceramic matrix composite (CMC). An EBC may help protect the blade from the effects of environmental objects such as hot gas, water vapor and oxygen that may come in contact with the blade while a gas turbine is in operation. An EBC may be silicon-based, and it may be applied as several layers of various materials. In the embodiments of the present disclosure, the materials in each layer may be any material, including ceramic material, and such materials may be applied using any means or methods, including Atmospheric Plasma Spray (APS), Reactive Ion Implantation, Chemical Vapor Deposition (CVD), Plasma enhanced CVD (PECVD), dip coating, and electro-phoretic deposition (EPD).

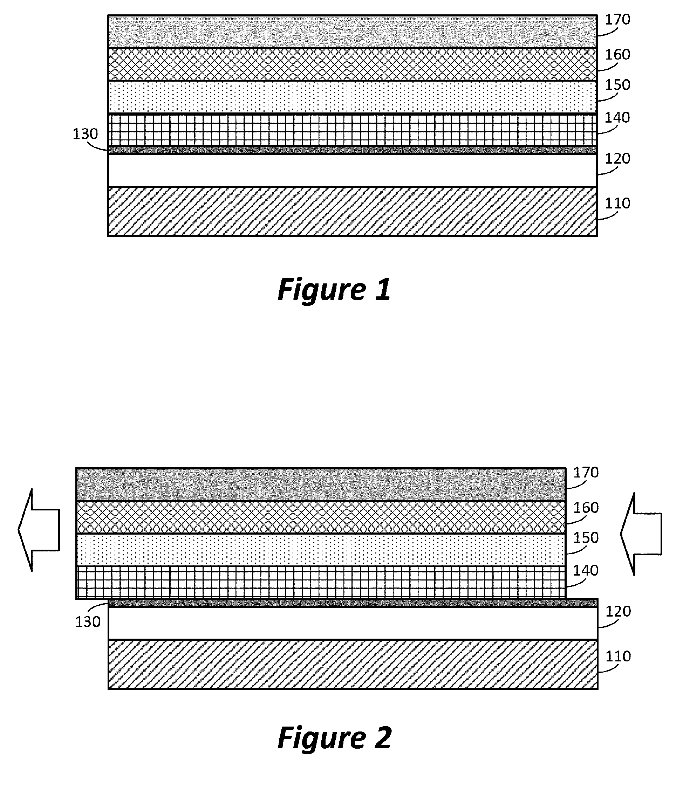

Figure 1 illustrates an example coating that may be applied to a CMC blade. Substrate 110 of a such blade may be coated with bond layer 120 that may serve as a bond coat and assist in bonding the EBC layers to substrate 110. In an embodiment, bond layer 120 may be a silicon bond coat. EBC layer 140 may be applied on bond layer 120. Additional EBC layers 150, 160, and 170 may further be applied over EBC layer 140. Any number of EBC layers may be applied to substrate 110 and any other blade or surface disclosed herein, using any means and methods, and any material may be used for any blade, bond layer, and EBC layer disclosed herein, including bond layer 120, EBC layers 140, 150, 160, and 170 and for substrate 110. All such embodiments are contemplated as within the scope of the present disclosure.

In the gas turbine environment in which substrate 110 may be configured, hot gasses may cause bond layer 120 to oxidize and melt due to the elevated temperatures caused by such gases. Upon melting and oxidation, bond layer 120 may form viscous fluid layer 130 that may be a viscous glass layer. In some embodiments, viscous fluid layer 130 may be composed of thermally grown oxide (TGO). As shown in Figure 2, viscous fluid layer 130 may move under the shear stress caused by the centrifugal load applied to substrate 110 and the mismatch of co-efficient thermal expansion (CTE) with the outer EBC layers, such as layers 140, 150, 160, and 170. Such movement may be referred to as the aftermath of a phenomenon known as "creep". In materials science, creep is the tendency of a solid material to slowly move or deform permanently under the influence of stresses. The creep of EBC layers 140, 150, 160, and 170 may limit the usable lifespan of substrate 110, especially when cracking of any of EBC layers 140, 150, 160, and 170 occurs.

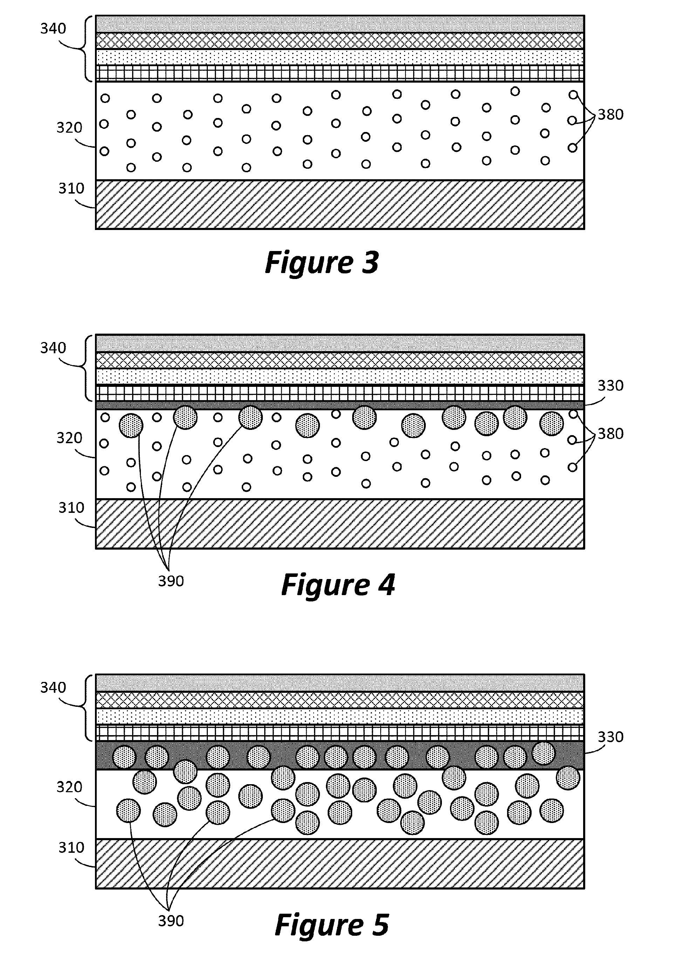

In an embodiment, a reactive component such as titanium (Ti), titanium monoxide (TiO), or a combination of titanium and titanium monoxide may be included with silicon in a composition may be used for the bond layer. Figure 3 illustrates an example of such an embodiment. Note that other reactive materials may be used in the bond layer instead of, or in addition to, titanium, such as zirconium, hafnium, ruthenium, rutherfordium, and vanadium. In some embodiments, titanium may be the most reactive in a bond layer. Titanium may have an increased affinity for oxygen as compared to silicon, and therefore may reduce and reverse TGO formation as described herein. Titanium may also serve as a solid solution strengthener in Gamma and Gamma' phases. The high melting point of titanium will also prevent liquid phase transport under most operating conditions.

Bond layer 320 may be applied to blade 310. EBC layers 340 may be applied over bond layer 320. Bond layer 320 may be composed, at least in part, of silicon and may include particles that react with ions of oxide such as, for example, titanium nanoparticles 380 that may be composed of titanium, titanium monoxide, or a combination of titanium and titanium monoxide. Nanoparticles may be used for any particles included in a bond layer as disclosed herein to provide a larger reactive surface area. However, other types of particles are contemplated as within the scope of the present disclosure.

Upon generation of TGO, atoms of the titanium particles in bond layer 320 may bond with oxygen atoms present in generated TGO. In an embodiment, titanium nanoparticles 380 may include titanium in the form of titanium monoxide (TiO), which is known to be very reactive and non-stoichiometric. At low temperatures, oxidation may occur at bond layer 320 due to exposure to water vapor or gases or via any other mechanism. Figure 4 illustrates an example embodiment where TGO layer 330 has formed. In this embodiment, rather than only the silicon of bond layer 320 reacting with the generated ions of oxide to form TGO layer 330, titanium nanoparticles 380 may also react with the ions of oxide, setting up a competing reaction to the reaction of bond layer 320. In an embodiment, molecules and/or atoms of titanium nanoparticles 380 may bond with oxygen atoms of the ions of oxide to generate titanium dioxide (TiO₂) 390, thereby reducing the loss of silicon as silica due to oxidation and prolonging the useful lifespan of bond layer 320. In this embodiment, the bonding of atoms of titanium nanoparticles 380 and/or molecule of titanium monoxide contained therein with the ions of TGO layer 330 may also reduce the amount of TGO created, thereby reducing the amount of creep that may be introduced due to the oxidation of bond layer 320 generating TGO layer 330. Moreover, because titanium monoxide is very reactive, titanium monoxide contained in titanium nanoparticles 380 may remove oxygen from silicon dioxide that may be present in TGO layer 330 before temperatures are high enough to activate elemental titanium (Ti) in titanium nanoparticles 380.

At higher temperatures, titanium nanoparticles 380 may also reverse the oxidation of bond layer 320, thereby reversing the effects of creep. In an embodiment, once an adequately high temperature is obtains at the turbine blade, elemental titanium in titanium nanoparticles 380 may react with the silicon dioxide (SiO₂) in TGO layer 330 created by oxidation of bond layer 320 to remove one or both oxygen atoms of the silicon dioxide, in an embodiment taking and bonding with oxygen atoms of silicon dioxide to generate titanium dioxide (TiO₂) 390. By removing both oxygen atoms of silicon dioxide, atoms of titanium nanoparticles 380 may reduce silicon dioxide to elemental silicon. Because this process may remove a primary component of TGO layer 330, silicon dioxide, in this embodiment the creation of TGO layer 330 may be reversed and therefore the effects of creep may be reduced or eliminated.

Titanium dioxide 390 may provide nucleating points for making agglomerates, or larger pieces of material that may also assist in providing a mechanical restraint on TGO layer 330 by increasing the viscosity of TGO layer 330, and thereby reducing creep by thwarting the movement of TGO layer 330. Such agglomerates may oppose transportation of TGO layer 330 flow via mechanical and chemical means (e.g., Cottrell atmosphere such as the interaction of dopants with dislocation clouds). Titanium dioxide 390 may also help form partial crystallization point nuclei for TGO in TGO layer 330 during thermal cycling.

Figure 5 illustrates another embodiment of the present disclosure where all of titanium 380 has reacted with oxygen atoms generated by oxidation to convert titanium 380 into titanium dioxide 390. Because molecules of titanium dioxide 390 are relatively large (i.e., titanium dioxide molecules have a relatively larger atomic radius), such molecules may better hinder the flow of TGO layer 330 as compared to smaller molecules, even if TGO generation continues after all of titanium 380 has been converted to titanium dioxide 390. These larger titanium dioxide molecules may serve as a mechanical restraint on TGO layer 330 by increasing the viscosity of TGO layer 330, and thereby reducing creep by thwarting the movement of TGO layer 330. Note that the viscosity of TGO layer 330 is also increased before all of titanium 380 has been converted to titanium dioxide 390, as seen in Figure 4. Any molecules of titanium dioxide 390 may also serve as a mechanical barrier or physical restraint for any TGO that may form and cause creep. Moreover, because titanium dioxide is erosion resistant and has a high melting point, the beneficial effects of titanium dioxide 390 may be long-lasting and relatively durable.

Thus, in some embodiments, the addition of particles of titanium to a silicon-based bond layer may provide any or all of the advantages of reducing the consumption of silicon due to oxidation in low temperatures, reversing the creation of silicon dioxide due to oxidation at higher temperatures and thereby reducing the amount of TGO created that may cause creep, and providing mechanical barriers or physical restraints for any TGO that may form. The presently disclosed embodiments may increase the lifespan of EBC layers and therefore of gas turbine blades in general while being simple to implement and cost effective.

This written description uses examples to disclose the subject matter contained herein, including the best mode, and also to enable any person skilled in the art to practice the invention, including making and using any devices or systems and performing any incorporated methods. The patentable scope of this disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A gas turbine blade comprising:
a surface;
a bond layer applied to the surface, the bond layer comprising silicon and with a reactive material that chemically reacts with thermally grown oxide generated at the bond layer; and
a protective layer applied to the bond layer.

2. The gas turbine blade of claim 1, wherein the reactive material comprises titanium.

3. The gas turbine blade of claim 2, wherein the titanium reacts with the thermally grown oxide to generate titanium dioxide.

4. The gas turbine blade of claim 2, wherein the titanium reacts with silicon dioxide in the thermally grown oxide to generate titanium dioxide.

5. The gas turbine blade of claim 3 or claim 4, wherein the titanium dioxide increases the viscosity of the thermally grown oxide.

6. The gas turbine blade of any preceding claim, wherein the reactive material comprises titanium monoxide.

7. The gas turbine blade of any preceding claim, further comprising at least one additional protective layer.

8. The gas turbine blade of any preceding claim, wherein the protective layer comprises an environmental barrier coating.

9. The gas turbine blade of any preceding claim, wherein the bond layer is applied using one of atmospheric plasma spray, chemical vapor deposition, plasma enhanced chemical vapor deposition, dip coating, and electro-phoretic deposition.

10. The gas turbine blade of any preceding claim, wherein the protective layer is applied using one of atmospheric plasma spray, chemical vapor deposition, plasma enhanced chemical vapor deposition, dip coating, and electro-phoretic deposition.

11. A method comprising:
applying a bond layer to a surface of a gas turbine blade, the bond layer comprising silicon and a reactive material that reacts with thermally grown oxide generated at the bond layer; and
applying a protective layer to the bond layer.

12. The method of claim 11, wherein the reactive material comprises titanium.

13. The method of claim 12, wherein the titanium reacts with the thermally grown oxide to generate titanium dioxide.

14. The method of claim 12, wherein the titanium reacts with silicon dioxide in the thermally grown oxide to generate titanium dioxide.

15. The method of claim 13 or claim 14, wherein the titanium dioxide increases the viscosity of the thermally grown oxide.

16. The method of any one of claims 11 to 15, wherein the reactive material comprises titanium monoxide.

17. The method of any one of claims 11 to 16, further comprising applying at least one additional protective layer.

18. The method of any one of claims 11 to 17, wherein the protective layer comprises an environmental barrier coating.

19. The method of any one of claims 11 to 18, wherein the bond layer is applied using one of atmospheric plasma spray, chemical vapor deposition, plasma enhanced chemical vapor deposition, dip coating, and electro-phoretic deposition.

20. The method of any one of claims 11 to 19, wherein the protective layer is applied using one of atmospheric plasma spray, chemical vapor deposition, plasma enhanced chemical vapor deposition, dip coating, and electro-phoretic deposition.
